(19) Europäisches Patentamt
European Patent Office
Office européen des brevets

(11) Veröffentlichungsnummer: **0 344 108 A2**

(12) # EUROPÄISCHE PATENTANMELDUNG

(21) Anmeldenummer: **89810359.3**

(22) Anmeldetag: **17.05.89**

(51) Int. Cl.⁴: **B 05 D 1/20**

(30) Priorität: **27.05.88 CH 2008/88**

(43) Veröffentlichungstag der Anmeldung:
**29.11.89 Patentblatt 89/48**

(84) Benannte Vertragsstaaten:
**BE CH DE FR GB IT LI NL**

(71) Anmelder: **CIBA-GEIGY AG**
**Klybeckstrasse 141**
**CH-4002 Basel (CH)**

(72) Erfinder: **Wegmann, Alex, Dr.**
**Binningerstrasse 38**
**CH-4123 Allschwil (CH)**

**Tieke, Bernd, Dr.**
**Route Bel-Air 22**
**CH-1723 Marly (CH)**

**Mayer, Carl W., Dr.**
**Steingrubenweg 224**
**CH-4125 Riehen (CH)**

**Hilti, Bruno, Dr.**
**Marschalkenstrasse 27**
**CH-4054 Basel (CH)**

**Fischer, Walter, Dr.**
**Vogesenstrasse 77**
**CH-4153 Reinach (CH)**

**Wernet, Wolfgang, Dr.**
**Schillerstrasse 40**
**D-7800 Freiburg (DE)**

(54) **Elektroaktive ultradünne Schichten.**

(57) Beschrieben werden Mono- oder Multischichtsysteme enthaltend Verbindungen der Formel I

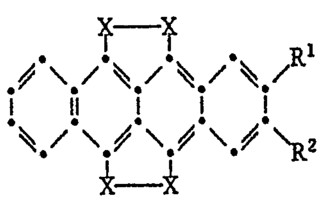

(I),

worin X S oder Se ist, $R^1$ $C_1$-$C_{30}$Alkyl, $-CF_3$, $-O-R^3$, $-S-R^3$ oder $-CO-O-R^3$ bedeutet, $R^2$ Wasserstoff, $C_1$-$C_{30}$Alkyl, $-CF_3$, $-O-R^3$, $-S-R^3$ oder $-CO-O-R^3$ ist und $R^3$ $C_1$-$C_{30}$Alkyl oder $C_1$-$C_{30}$Teil- oder Perfluoralkyl ist. Aus den Schichtsystemen können durch Dotierung mit Elektronenakzeptoren elektrisch leitfähige Schichten hergestellt werden, die sich beispielsweise zur Fertigung elektrisch leitfähiger Ueberzüge eignen.

EP 0 344 108 A2

**Beschreibung**

## Elektroaktive ultradünne Schichten

Die vorliegende Erfindung betrifft Mono- oder Multischichten aus Tetrathiotetracenderivaten (TTT-Derivaten) oder Tetraselenotetracenderivaten (TSeT-Derivaten), ausgewählte Verfahren zu deren Herstellung, sowie die Verwendung der Schichtsysteme zur Herstellung von elektronischen Bauteilen, als Elektroden oder als Sensoren.

Aus den EP-A-109,360 und -153,905 ist 2-Fluor-TSeT bekannt. Aus dieser Verbindung lassen sich Brom- oder Chlorkomplexe herstellen, die bei tiefen Temperaturen metallische Leitfähigkeit aufweisen.

Aus der DE-A-3,510,092 sind 2-Carbonsäureester oder 2,3-Dicarbonsäureester des TTT bzw. des TSeT bekannt. Die Verbindungen können über funktionelle Reste in Polymere eingebaut werden. Ferner lassen sich aus diesen Derivaten bzw. aus den Polymeren enthaltend diese Derivate durch Dotierung mit Elektronenakzeptoren elektrisch leitfähige Charge-Transfer Komplexe herstellen. Die Polymeren enthaltend diese Komplexe zeichnen sich durch eine gute Photoleitfähigkeit aus.

Aus Angew. Chem., 98, 1114 (1986) ist bekannt, dass aus bestimmten Phthalocyaninderivaten nach dem Langmuir-Blodgett Verfahren (LB-Verfahren) elektroaktive Mono- oder Multischichtsysteme aufgebaut werden können.

Elektrisch leitfähige LB-Multischichten aus iod-dotiertem α-Quinquethiophen in Mischung mit Cd-Stearat werden in Synth. Met., 16, 17 (1986) beschrieben.

Aus Langmuir, 2, 513 (1986) ist bekannt, dass iod-dotierte LB-Multischichten aus Tetrakis-(cumylphenoxy)-phthalocyaninen elektrisch leitfähig sind.

Es wurde nun gefunden, dass TTT- oder TSeT-Derivate monomolekulare Schichten bilden, dass sich diese Schichten nach dem LB-Verfahren auf feste Träger übertragen lassen und dass diese Schichtsysteme im dotierten Zustand elektrisch leitfähig sind.

Ferner wurden Herstellungsverfahren für dotierte LB-Systeme gefunden, wobei die Dotierung in der monomolekularen Schicht erfolgt und erst anschliessend das LB-System aufgebaut wird, oder wobei die Dotierung der Mono- oder Multischicht durch Kontakt mit einem wässrigen Dotierungsmittel erfolgt.

Die vorliegende Erfindung betrifft Mono- oder Multischichtsysteme enthaltend Verbindungen der Formel I

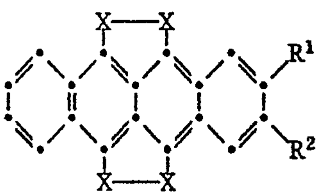

(I),

worin X S oder Se ist, $R^1$ $C_1$-$C_{30}$Alkyl, $-CF_3$, $-O-R^3$, $-S-R^3$ oder $-CO-O-R^3$ bedeutet, $R^2$ Wasserstoff, $C_1$-$C_{30}$Alkyl, $-CF_3$, $-O-R^3$, $-S-R^3$ oder $-CO-O-R^3$ ist, und $R^3$ $C_1$-$C_{30}$Alkyl oder $C_1$-$C_{30}$Teil- oder Perfluoralkyl ist.

Unter dem begriff "Mono- oder Multischichtsystem" ist ganz allgemein jede Anordnung zu verstehen, welche die Verbindungen der Formel I in Form einer dünnen Schicht oder einer Folge von dünnen Schichten enthält. Unter "dünner Schicht" ist im Rahmen dieser Beschriebung eine Schicht zu verstehen, welche die Dicke von einer oder einigen Moleküllagen besitzt.

Bei solchen Schichtsystemen kann es sich beispielsweise um sogenannte "Cast Bilayer" Filme enthaltend Verbindungen der Formel I handeln. Diese Technik wird beispielsweise von T. Kunitake et al. in Thin Solid Films, 121, 189-91 (1984) und von M. Shimomura et al. in Ber. Bunsenges. Phys. Chem., 87, 1134-43 (1983) beschrieben.

Vorzugsweise handelt es sich bei solchen Mono- oder Multischichtsystemen um eine monomolekulare Schicht oder um Folgen von monomolekularen Schichten enthaltend Verbindungen der Formel I, die durch Uebertragung auf feste Träger nach dem Langmuir-Blodgett Verfahren (LB-Verfahren) erhältlich sind.

Bedeuten irgendwelche Reste Alkyl, so kann es sich dabei um geradkettige oder verzweigte Reste handeln. Bevorzugt werden geradkettige Reste. Ferner können die Alkylreste eine oder mehrere trans-Doppelbindungen oder Dreifachbindungen aufweisen, die nicht in 1-Position stehen. Mehrere trans-Doppelbindungen oder Dreifachbindungen können isoliert oder miteinander konjugiert sein. Spezifische Beispiele für Alkylreste sind Methyl, Ethyl, n-Propyl, Isopropyl, n-Butyl, Isobutyl, n-Pentyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Heneicosyl, n-Docosyl, n-Tetracosyl, n-Hexacosyl, n-Octacosyl und n-Triacontyl, oder Allyl, Propargyl, Octadec-9-trans-enyl oder Pentacosa-10,12-diinyl.

Die Perfluoralkylreste weisen vorzugsweise 1-12 C-Atome auf.

Die Verbindungen der Formel I sind teilweise bekannt. So lassen sich die Verbindungen der Formel I, worin X S oder Se ist, $R^1$ $-CO-O-R^3$ bedeutet, $R^2$ Wasserstoff oder $-CO-O-R^3$ ist und $R^3$ die oben definierte Bedeutung besitzt, in Analogie zu dem in der DE-A-3,510,092 beschriebenen Verfahren herstellen.

Die Verbindungen der Formel I, worin X S ist, $R^1$ Alkyl, $-CF_3$, $-O-R^3$ oder $-S-R^3$ bedeutet, und $R^2$ Wasserstoff, Alkyl, $-CF_3$, $-O-R^3$ oder $-S-R^3$ ist, können nach folgendem Schema erhalten werden:

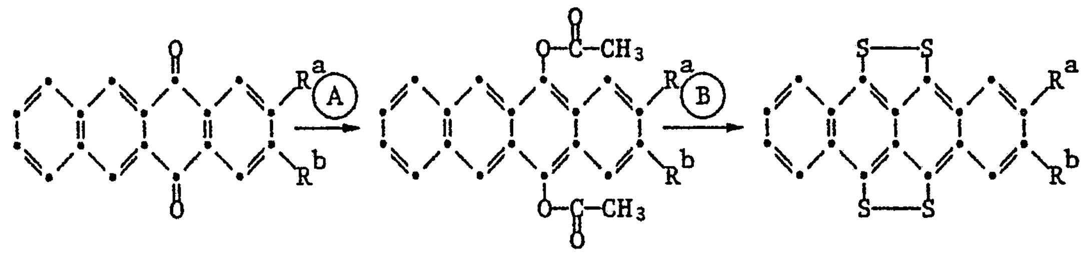


;

(II) (III) (IV)

dabei bedeuten $R^a$ Alkyl, $-CF_3$, $-O-R^3$ oder $-S-R^3$ und $R^b$ ist Wasserstoff, Alkyl, $-CF_3$, $-O-R^3$ oder $-S-R^3$.

Die reduktive Acetylierung Ⓐ des Tetracenchinons II wird dabei beispielsweise durch Umsetzung mit Zn-Staub in Gegenwart von Acetanhydrid, Kaliumacetat und einem polaren, aprotischen Lösungsmittel, wie Essigsäureethylester, vorgenommen. Bei Reaktion Ⓐ wird das Reduktionsmittel in der Regel in geringem stöchiometrischem Ueberschuss, beispielsweise in Mengen von 2-4 Mol, bezogen auf ein Mol II, vorgelegt.

Die Umsetzung der Bis-acetoxyverbindung III zum entsprechenden TTT-Derivat IV (Reaktion Ⓑ) erfolgt zweckmässig durch Erhitzen der Verbindung III mit Schwefel in Gegenwart eines sauren Katalysators, wie einer aromatischen Sulfonsäure, beispielsweise p-Toluolsulfonsäure. Die Umsetzung wird in der Regel in einem inerten organischen Lösungsmittel für die Verbindung III vorgenommen. Beispiele dafür sind halogenierte aromatische Kohlenwasserstoffe, wie Dichlorbenzol oder Trichlorbenzol. Bei Reaktion Ⓑ legt man den Schwefel in der Regel im Ueberschuss vor und die Reaktion wird vorzugsweise unter Rückfluss des jeweiligen Lösungsmittels durchgeführt.

Die Verbindungen der Formel I, worin X Se ist und $R^1$ bzw. $R^2$ die oben für $R^a$ bzw. $R^b$ definierten Bedeutungen besitzen, können nach folgendem Schema erhalten werden:

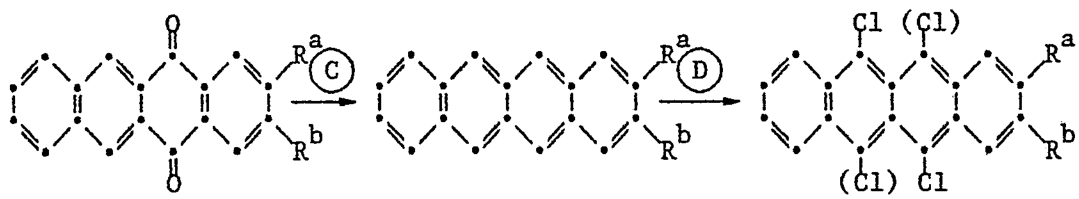


(II) (V) (VI)

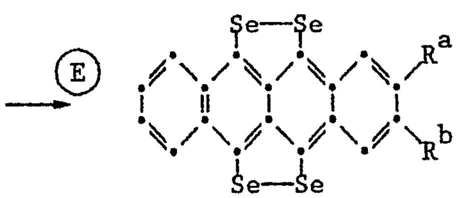


VII

Die Reduktion des Tetracenchinons II zum entsprechenden Tetracen V (Reaktion Ⓒ) kann in an sich bekannter Weise durch Umsetzung der Verbindung II mit einem Ueberschuss eines Reduktionsmittels, beispielsweise Zn-Staub, erfolgen. Die Umsetzung wird vorzugsweise in einem Gemisch aus Eisessig und Kaliumacetat durchgeführt.

Die Umsetzung des Tetracenderivats V zum entsprechenden Dichlor- oder Tetrachlortetracen VI kann in an sich bekannter Weise durch Reaktion der Verbindung V mit Sulfurylchlorid vorgenommen werden. Beispiele für solche Reaktionen an analogen Verbindungen findet man in der EP-A-109,360.

Die Umsetzung der Verbindung VI zum TSeT-Derivat VII kann ebenfalls in Analogie zu bekannten Verfahren erfolgen. Dazu erhitzt man die Verbindung der Formel VI in Gegenwart von Selen. Beispiele für solche Umsetzungen sind ebenfalls in der EP-A-109,360 zu finden.

Die Verbindungen der Formel IIa

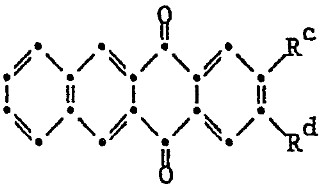

(IIa),

worin $R^c$ -O-$R^3$ oder -S-$R^3$ ist, $R^d$ eine der für $R^c$ definierten Bedeutungen besitzt oder Wasserstoff ist und $R^3$ die oben definierte Bedeutung besitzt, können aus 2-Fluor- bzw. 2,3-Difluor-tetracen-5,12-dion durch Umsetzung mit $R^3$-OH oder $R^3$-SH in Gegenwart von Kaliumcarbonat erhalten werden. Die Umsetzung erfolgt im allgemeinen in einem polaren, aprotischen Lösungsmittel, beispielsweise in Dimethylsulfoxid. Das Ausgangsmaterial 2-Fluor-tetracen-5,12-dion ist aus der EP-A-153,905 bekannt. Das 2,3-Difluorderivat kann in Analogie zum 2-Fluorderivat hergestellt werden, indem man 1,2-Difluorbenzol anstelle von Fluorbenzol verwendet.

Die Verbindungen der Formel IIb

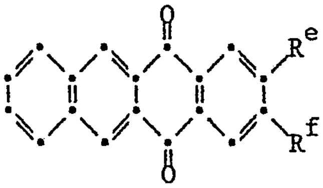

(IIb),

worin $R^e$ Alkyl bedeutet und $R^f$ Wasserstoff oder Alkyl ist, können durch Friedel-Crafts-Acylierung von Alkyl- oder 1,2-Dialkylbenzolen mit Naphthalin-2,3-dicarbonsäureanhydrid und anschliessender Cyclisierung erhalten werden.

Beispiele für eine analoge Reaktionsfolge, bei der anstelle von Alkylbenzolen Fluorbenzol eingesetzt wird, findet man in der EP-A-109,360.

Die Verbindungen der Formel IIc, worin $R^g$ Wasserstoff, Alkyl, oder $-CF_3$ bedeutet, lassen sich durch Umsetzung von 1,2-Dibrombenzocyclobuten VIII mit dem entsprechend substituierten 1,4-Naphthochinon IX gemäss folgendem Schema erhalten:

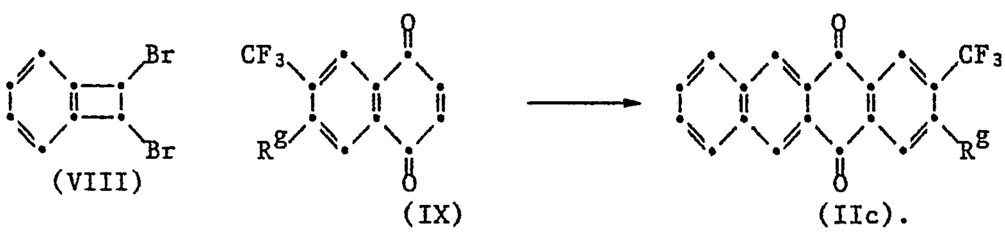

(VIII) (IX) (IIc).

Diese Umsetzungen sind an sich aus Ann. Quim. Ser. C, 81(2), 133-8 (1985) bekannt. Dort wird auch die Herstellung der Verbindung VIII beschrieben.

Die Verbindungen der Formel IX lassen sich durch Diels-Alder Reaktion von 1,4-Benzochinon mit α-Pyronen der Formel X erhalten

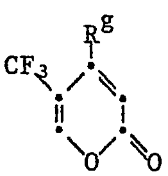

(X),

dabei hat $R^g$ die oben definierte Bedeutung.

Die Verbindungen der Formel X, worin $R^g$ Wasserstoff oder $-CF_3$ bedeutet, lassen sich in an sich bekannter Weise durch Umsetzung von bekannten α-Pyron-5-carbonsäuren oder α-Pyron-4,5-dicarbonsäurediestern mit $SF_4/HF$ herstellen. Die α-Pyron-Ausgangsprodukte sind beispielsweise in der US-A-4,617,151 beschrieben.

Die Verbindungen der Formel X, worin $R^g$ Alkyl ist, lassen sich in Analogie zum in der US-A-4,617,151 beschriebenen Verfahren durch Cyclisierung von Verbindungen der Formel XI in Gegenwart starker, wasserfreier Säuren, vorzugsweise wasserfreier Ameisensäure, und nachfolgende Ueberführung der $-COOR^4$ Gruppe mit $SF_4/HF$ in $-CF_3$ erhalten

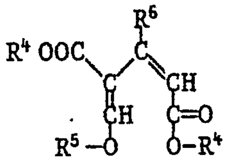

(XI);

darin bedeuten $R^4$, $R^5$ und $R^6$ Alkylreste.

Die Verbindungen der Formel XI lassen sich in Analogie zum aus der US-A-4,617,151 bekannten Verfahren durch Umsetzung von Ameisensäureestern $HCOOR^5$ in Gegenwart von $TiCl_4$ mit Verbindungen der Formel XII erhalten

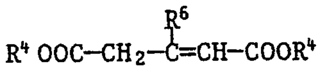

(XII);

dabei besitzen $R^4$ und $R^6$ die weiter oben definierte Bedeutung.

Die Verbindungen der Formel XII können ausgehend von den an sich bekannten Ketodicarbonsäureestern der Formel XIIa hergestellt werden

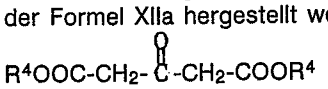 (XIIa);

dabei besitzt $R^4$ die oben definierte Bedeutung.

Dazu setzt man eine Verbindung der Formel XIIa mit einem Chlorierungsmittel, besipielsweise mit $PCl_3$, $PCl_5$ oder $SOCl_2$, zu dem entsprechenden 2-Chlorprop-1-en-1,3-dicarbonsäuredialkylester um und dehydrohalogeniert diesen in an sich bekannter Weise zu dem entsprechenden Allen-1,3-dicarbonsäuredialkylester.

Diese Allenverbindung wird anschliessend mit einem Reagenz $R^6M$, worin M ein Alkalimetall, beispielsweise Li, Na oder K, ist und $R^6$ einen Alkylrest darstellt in einem inerten Lösungsmittel in Gegenwart einer Kupfer-I-verbindung, beispielsweise CuCN oder CuCl, umgesetzt und dann durch Hydrolyse zu einer Verbindung der Formel XII umgesetzt. Die Reaktionstemperatur beträgt zweckmässig -100 bis -20°C.

Diese Umsetzungen werden vorzugsweise in einem organischen, inerten und polaren Lösungsmittel vorgenommen, beispielsweise in Ethern, wie Tetrahydrofuran, Sulfoxiden, wie Dimethylsulfoxid, Sulfonen, wie Tetramethylensulfon, N-substituierten Carbonsäureamiden oder Lactamen, wie Dimethylformamid oder N-Methylpyrrolidon.

Aus den Verbindungen der Formel I lassen sich überraschenderweise stabile monomolekulare Schichten an der Wasser/Luft Grenzfläche herstellen. Dazu trägt man in an sich bekannter Weise eine geringe Menge einer Lösung einer Verbindung der Formel I in einem vorzugsweise niedrigsiedenden und nicht mit Wasser mischbaren Lösungsmittel auf eine Wasseroberfläche auf, lässt das Lösungsmittel verdampfen und komprimiert den entstandenen Film, so dass eine stabile monomolekulare Schicht auf der Wasseroberfläche entsteht.

Die Subphase, auf der die monomolekulare Schicht ausgebildet wird, besteht in der Regel aus mehrfach destilliertem oder deionisiertem und filtriertem Wasser, dem gegebenenfalls zur Stabilisierung der Filme geringe Mengen von Salzen, beispielsweise von $CdCl_2$ oder $BaCl_2$, zugesetzt sind. Ferner kann die Subphase Puffersubstanzen, beispielsweise $NaHCO_3$, enthalten. Diese Modifikationen sind dem Fachmann bekannt und werden je nach der Art der filmbildenden Substanzen ausgewählt.

Die Stabilität der Filme lässt sich bekanntermassen durch Wahl der experimentellen Parameter beeinflussen. So kann man beispielsweise relativ labile Filme aus Verbindungen der Formel I durch Kühlen der Subphase stabilisieren oder man verwendet Verbindungen der Formel I in Kombination mit anderen geeigneten amphiphilen Verbindungen, die monomolekulare Filme zu stabilisieren vermögen. Beispiele für solche Verbindungen sind langkettige Carbonsäuren, wie Palmitinsäure, Stearinsäure, Arachinsäure oder Behensäure oder deren Ester, insbesondere die Methylester dieser Säuren; langkettige primäre Amine, wie n-Hexadecyl-, n-Octadecyl- oder n-Eicosylamin; langkettige Alkohole, wie n-Hexadecan-, n-Octadecan oder n-Eicosanol; langkettige aliphatische Kohlenwasserstoffe, wie Hexadecan, Octadecan oder Eicosan; substituierte Tetracenderivate, wie 2-$C_1$-$C_{18}$Alkoxytetracen, 2-$C_1$-$C_{18}$Alkoxytetracen-5,12-dion, 2-$C_1$-$C_{18}$Alkoxy-5,12-bis(acetoxy)-tetracen oder die entsprechenden 2,3-Bis-alkoxyderivate; oder Steroide und Steroidderivate, wie Cholesterol; neben gesättigten Derivaten können auch ethylenisch- oder acetylenischungesättigte Derivate eingesetzt werden. Beispiele dafür sind ω-Tricosensäure, deren Ester, davon abgeleitete Amine oder Alkohole. Die Säuren werden bevorzugt in Form von Salzen, insbesondere Cd-Salzen, eingesetzt.

Die Verbindungen der Formel I sind in der Regel zu wenigstens 1 Gew.%, bezogen auf die Gesamtmischung, in solchen Mischungen enthalten.

Bevorzugt werden Systeme enthaltend Verbindungen der Formel I, worin X S ist. Besonders bevorzugt werden Systeme enthaltend Verbindungen der Formel I, worin X S ist, $R^1$ -O-$R^3$ ist und $R^2$ Wasserstoff bedeutet. Ebenfalls bevorzugt werden System enthaltend Verbindungen der Formel I, worin X S ist, $R^1$ $CF_3$ bedeutet und $R^2$ Wasserstoff ist. $R^3$ ist vorzugsweise $C_3$-$C_{18}$Alkyl und insbesondere n-Octyl.

Monomolekulare Filme enthaltend Verbindungen der Formel I und gegebenenfalls weitere geeignete amphiphile Verbindungen lassen sich überraschenderweise nach dem LB-Verfahren gut von der Wasseroberfläche auf feste Träger übertragen. Dazu taucht man in an sich bekannter Weise einen festen Träger durch einen komprimierten, monomolekularen Film auf einer Wasseroberfläche und überträgt dadurch besagten Film auf den Träger.

Vorzugsweise enthalten solche Filme 1-95 Mol %, insbesondere 20-75 Mol %, an Verbindungen der Formel I in Kombination mit weiteren zur Stabilisierung von monomolekularen Filmen befähigten, amphiphilen Verbindungen.

Durch mehrmaliges Ein- und Austauchen lassen sich auf diese Weise Mehrschichtsysteme herstellen.

Bevorzugt werden LB-Mono- oder Multischichtsysteme aus solchen Mischfilmen.

Die Schicht auf der Wasseroberfläche kann nach jedem Tauchvorgang ausgetauscht werden, so dass unterschiedliche Folgen von Schichten auf dem Träger herstellbar sind.

Die Verfahrensweisen zur Herstellung von Multischichten sind dem Fachmann auf dem Gebiet der LB-Systeme an sich bekannt und beispielsweise in "Techniques of Chemistry, Physical Methods Of Chemistry, Vol. I, Part 3B, S. 666-671; Editor: A Weissberger, P. Rossiter" beschrieben.

Als feste Träger für das LB-Verfahren kommen unterschiedlichste hydrophile oder hydrophobe Substrate mit mikroskopisch planarer Oberfläche in Frage, Beispiele dafür sind Metalle, wie Aluminium, Kupfer, Silber oder Gold, Halbleiter, wie Germanium, Silizium oder GaAs, anorganische Materialien, wie Glas, Quarz, ZnSe oder $Si_2N_3$ oder Kunststoffe, wie Teflon®, Polyethylen, Polymethylmethacrylat, Polystyrol oder Polyester. Man kann auch hydrophobierte Träger benutzen, beispielsweise Glas oder Quarz, das mit Trichlormethylsilan, Dichlordimethylsilan oder Trichloroctadecylsilan vorbehandelt oder mit einigen Schichten Cd-Arachidat vorbeschichtet wurde.

Die Herstellung der Mono-oder Multischichtsysteme umfasst also im wesentlichen die Schritte

i) Herstellung einer monomolekularen Schicht aus einer Verbindung der Formel I oder aus einem Gemisch einer Verbindung der Formel I in Kombination mit weiteren zur Stabilisierung solcher Schichten befähigten amphiphilen Verbindungen, und

ii) Uebertragung dieser Schicht auf einen festen Träger gemäss dem Langmuir-Blodgett Verfahren durch ein- oder mehrfaches Ein-und/oder Austauchen besagten Trägers durch die Schicht.

Solche Monoschichten der Verbindung der Formel I lassen sich sukzessive nach dem LB-Verfahren übertragen. Diese Schichten können unmittelbar aufeinander folgen oder es handelt sich um alternierende Schichten aus verschiedenen schichtbildenden Materialien.

Vorzugsweise überträgt man Mischschichten aus Verbindungen der Formel I und Salzen langkettiger gesättigter Carbonsäuren, insbesondere Salzen der geradkettigen $C_{18}$-$C_{20}$Säuren, Salzen langkettiger ungesättigter Säuren, wie z.B. ω-Tricosensäure oder Pentacosa-10,12-diinsäure, Methylestern dieser Säuren, insbesondere von langkettigen gesättigten Carbonsäuren, oder substituierten Tetracenchinonen oder deren Bisacetoxyderivaten, vorzugsweise den Verbindungen der Formel XIII oder XIV

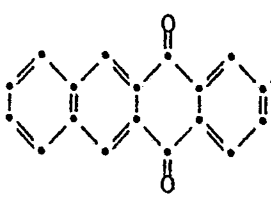 (XIII), 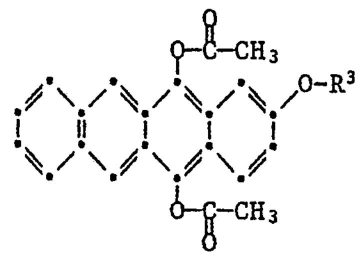 (XIV),

worin $R^3$ die weiter oben definierte Bedeutung besitzt.

Aus den Verbindungen der Formeln XIII und XIV lassen sich auch für sich stabile monomolekulare Schichten herstellen und nach dem LB-Verfahren auf feste Träger übertragen.

Durch Behandlung mit geeigneten Elektronenakzeptoren lassen sich mit den Verbindungen der Formel I Donor-Akzeptor Komplexe herstellen, die eine hohe elektrische Leitfähigkeit zeigen. Bei den Donor-Akzeptor Komplexen kann es sich gegebenenfalls um Radikalionensalze handeln, bei denen ein vollständiger Ladungstransfer stattgefunden hat.

Unter geeigneten Elektronenakzeptoren versteht man im Rahmen dieser Beschriebung solche Verbindungen, die aufgrund ihres Oxidationspotentials den Donor oxidieren können.

Geeignete Elektronenakzeptoren sind Halogene, wie Iod, Brom oder Chlor; Polybromide oder Polyiodide; Stickstoffoxide; oder organische Akzeptoren, wie Tetracyanoethylen, Tetracyanochinodimethan oder Chloranil. Bevorzugt verwendet man Halogene, insbesondere Iod.

Die Behandlung (Dotierung) des Mono- oder Multischichtsystems aus den Verbindungen der Formel I kann durch direkten Kontakt des hergestellten Schichtsystems mit dem Elektronenakzeptor erfolgen, beispielsweise durch Dotieren eines Schichtsystems mit Ioddampf.

Die Dotierung des Mono-oder Multischichtsystems aus den Verbindungen der Formel I kann ferner durch direkten Kontakt mit einer wässrigen Lösung enthaltend einen Elektronenakzeptor erfolgen. Dabei dringt das wässrig gelöste Dotierungsmittel überraschenderweise in das Schichtsystem ein, ohne dieses zu zerstören, und bewirkt eine Erhöhung der elektrischen Leitfähigkeit.

Die Erfindung betrifft daher auch ein Verfahren zur Herstellung von elektrisch leitfähigen Mono- oder Multischichtsystemen umfassend die oben definierten Schritte i) und ii) sowie iii) Kontaktieren des gebildeten

Mono-oder Multischichtsystems mit einer wässrigen Lösung enthaltend einen Elektronenakzeptor für die Verbindung der Formel I, welcher eine Oxidation besagter Verbindung bewirkt.

Ferner kann man auch eine bereits auf der Wasseroberfläche dotierte Monoschicht sukzessive auf einen Träger übertragen. Die Dotierung der Monoschicht erfolgt in der Regel durch Zugabe des Dotierungsmittels zur Subphase. Dabei bildet sich an der Wasser/Luft Grenzfläche ein Donor-Akzeptor Komplex aus den Verbindungen der Formel I und dem Dotierungsmittel aus. Dieser Komplex kann überraschenderweise mittels des LB-Verfahrens auf feste Träger übertragen werden.

Die Erfindung betrifft daher auch ein Verfahren zur Herstellung von elektrisch leitfähigen Mono- oder Multischichtsystemen umfassend die Schritte

i) Herstellung einer monomolekularen Schicht aus einer Verbindung der Formel I, gegebenenfalls in Kombination mit weiteren zur Stabilisierung solcher Schichten befähigten amphiphilen Verbindungen, und

ii) Uebertragung dieser Schicht auf einen festen Träger gemäss dem Langmuir-Blodgett Verfahren durch ein- oder mehrfaches Ein- und/oder Austauchen besagten Trägers durch die Schicht, wobei die Subphase zur Herstellung besagter monomolekularer Schicht einen Elektronenakzeptor enthält, welcher an der Wasser/Luft Grenzfläche mit der Verbindung der Formel I einen Donor-Akzeptor Komplex ausgebildet.

Beispiele für geeignete Elektronenakzeptoren für dieses Verfahren sind $KI_3$-Lösungen.

Besonders bevorzugt betrifft die Erfindung ein Verfahren zur Herstellung von elektrisch leitfähigen Mono- oder Multischichtsystemen umfassend die Schritte

i) Herstellung einer monomolekularen Schicht aus einer Verbindung der Formel I, oder aus einem Gemisch einer Verbindung der Formel I in Kombination mit weiteren zur Stabilisierung solcher Schichten befähigten amphiphilen Verbindungen,

ii) Uebertragung dieser Schicht auf einen festen Träger mit einer elektrisch leitfähigen Oberfläche durch ein- oder mehrmaliges Tauchen besagten Trägers durch die Schicht, und

iii) elektrochemische oxidation besagten Schichtsystems durch Eintauchen besagten beschichteten Trägers in eine Elektrolytlösung, in die auch eine Gegenelektrode eintaucht, und Schalten besagten Trägers als Anode unter Anlegen eines Potentials, so dass die Verbindung der Formel I in besagtem Schichtsystem unter Einbau von Gegenionen aus dem Elektrolyten oxidiert wird.

Bei der Ausführungsform des Verfahrens lassen sich Schichten mit einer besonders geringen Fehlstellendichte erzeugen.

Ein weiterer Vorteil dieses Verfahrens ist darin zu sehen, dass eine grosse Zahl verschiedener Gegenionen in das Schichtsystem eingebaut werden kann. Beispiele dafür sind anorganische Anionen, wie $ClO_4^-$, $BF_4^-$, $PF_6^-$, $SbF_6^-$, $SbCl_4^-$, $SbCl_6^-$, $F^-$, $Cl^-$, $Br^-$, $I^-$,= oder $I_3^-$, oder organische Anionen, wie Tetracyanochinodimethan$^-$, Tetracyanoethylen$^-$, Alkyl-, Aryl-, Alkaryl-, Aralkyl-, Fluoralkyl- oder Fluoralkarylsulfonat, -phosphat oder -phosphonat oder Heteroarylsulfonate, wie Pyrrolopyrroldisulfonat.

Mit einer Anwandlung diese letzteren Verfahrens lassen sich auch Schichtsysteme enthaltend eine oxidierte Form der Verbindungen der Formel I in die reduzierte Ausgangsverbindung zurückverwandeln, indem man in Schritt iii) das in die Elektrolytlösung eintauchende Schichtsystem als Kathode schaltet und ein Potential anlegt, so dass sich aus der oxidierten Form der Verbindung der Formel I die neutrale Form zurückbildet. Mit diesem abgewandelten Verfahren lassen sich reversible Farbänderungen in LB-Schichtsystemen erzielen.

Die Erfindung betrifft daher auch ein Verfahren zur reversiblen elektrochemischen Oxidation und Reduktion von LB-Schichtsystemen enthaltend eine Verbindung der Formel I umfassend das Eintauchen eines mit LB-Schichten enthaltend besagte Verbindung der Formel I beschichteten Trägers mit elektrisch leitfähiger Oberfläche in eine Elektrolytlösung, in die auch eine Gegenelektrode eintaucht, und Schalten besagten Trägers als Anode oder Kathode unter Anlegen eines Potentials, so dass die Verbindung der Formel I oxidiert oder die oxidierte Form der Verbindung der Formel I reduziert wird.

Die Erfindung betrifft ferner die elektrisch leitfähigen Mono- oder Multischichten enthaltend Donor-Akzeptor Komplexe aus Verbindungen der Formel I und einem Elektronenakzeptor.

Die Mono- und Multischichtsysteme aus Verbindungen der Formel I bzw. die dotierten Systeme enthaltend Donor-Akzeptor Komplexe aus diesen Verbindungen und Elektronenakzeptoren zeichnen sich durch eine hohe Stabilität an der Luft aus.

Die Spektren der undotierten und dotierten Formen unterscheiden sich bezüglich ihrer $\lambda_{max}$-Werte und ihrer Extinktionskoeffizienten.

Bei den Mono- oder Multischichtsystemen aus Verbindungen der Formel I bzw. bei den dotierten Systemen handelt es sich also um elektroaktive Materialien, d.h. um Materialien, die im oxidierten und in reduziertem Zustand unterschiedliche physikalische Eigenschaften besitzen und die durch Redoxprozesse zwischen den beiden Zuständen geschaltet werden können.

Die Mono- oder Multischichtsysteme enthaltend Verbindungen der Formel I eignen sich zur Herstellung von elektrisch leitfähigen Ueberzügen, elektrochromen Anzeigen, Elektroden und Sensoren.

Die Erfindung betrifft auch die Verwendung dieser Mono- oder Multischichtsysteme für die oben erwähnten Zwecke.

Die folgenden Beispiele erläutern die Erfindung.

## A) Herstellungsbeispiele

### Beispiel 1: Herstellung von 2-n-Octyloxi-5,6,11,12-tetrathiotetracen

#### 1.1. Herstellung des Endproduktes

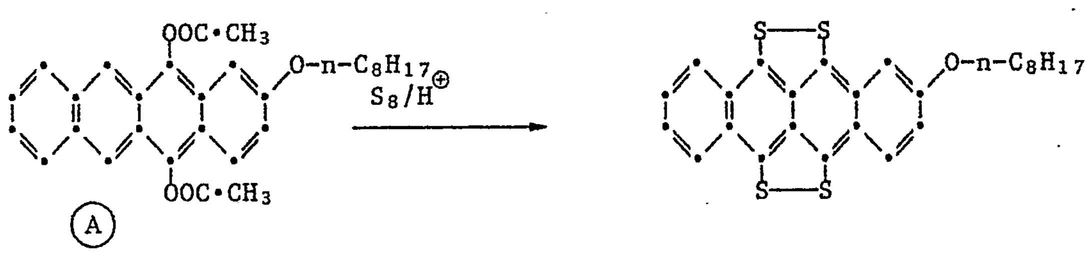


Ⓐ

In einem 250 ml Kolben mit Rückflusskühler und Gasleitungsrohr werden unter leichtem Argonfluss 846 mg (1,83 mMol) Diacetat Ⓐ, 507 mg (15,8 mVal) $S_8$ und 5 mg (0,026 mMol) p-Toluolsulfonsäure in 100 ml 1,2,4-Trichlorbenzol 5 $\frac{1}{2}$ Stunden refluxiert. Danach wird die dunkelgrüne Lösung am Hochvakuum eingedampft.

Das Rohprodukt (1,35 g) wird über eine Keiselgelflashsäule (240 g Kieselgel, Ø 7 cm) mit $CCl_4$ chromatographiert. [Das Kieselgel muss zuvor mit $CCl_4$/2 % Triethylamin behandelt und darauf mit reinem $CCl_4$ gewaschen werden, bis das Eluat wieder neutral ist.] Die dunkelgrün gefärbten Fraktionen enthalten das gereinigte 2-n-Octyloxi-5,6,11,12-tetrathiotetracen. Die Ausbeute beträgt 560 mg (65 %).
$\lambda_{max}$ (1,2,4-Trichlorbenzol) 698, 640, 472 nm;
Massenspektrum $M^+$ = 480 m/e; Die Fragmentierung steht mit der Struktur im Einklang.

#### 1.2. Herstellung des Diacetats Ⓐ durch reduktive Acetylierung von 2-n-Octyloxi-tetracen-5,12-dion

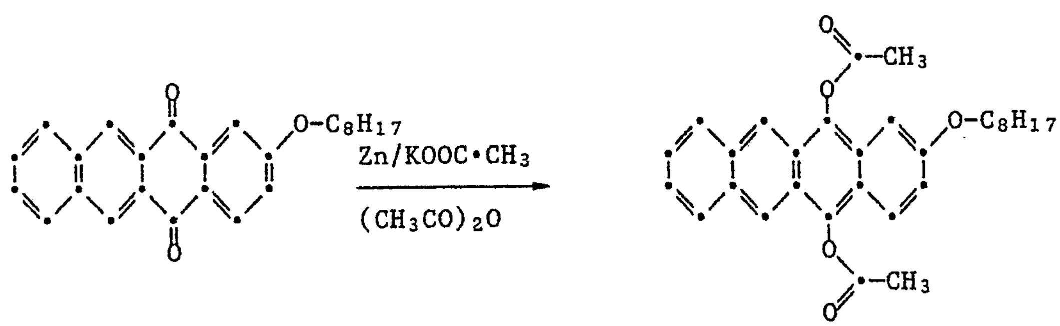


4 g (10,35 mMol) 2-n-Octyloxi-tetracen-5,12-dion, 40 ml Essigester, 25 ml Acetanhydrid und 3,05 g (31.05 mMol) Kaliumacetat werden unter Rühren mit 2.0 g (31,05 mMol) Zinkpulver versetzt. Nach 40 Min. Rühren bei 25° wird das Gemisch abfiltriert und der Rückstand viermal mit $CH_2Cl_2$ gewaschen. Die Filtrate werden eingedampft und der Rückstand aus $CH_2CL_2$/Pentan, dann aus Toluol umkristallisiert, Ausbeute 4,1 g (84 %), Smp. 107-111°.

#### 1.3. Herstellung von 2-n-Octyloxi-tetracen-5,12-dion

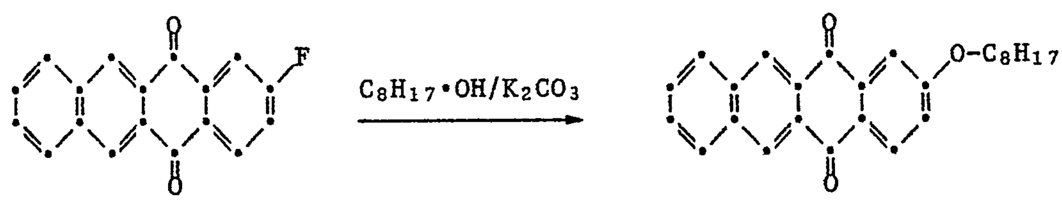


20 g (72,4 mMol) 2-Fluor-tetracen-5,12-dion, 94,3 g 1-Octanol, 30,01 g (217,2 mMol) wasserfreies Kaliumcarbonat und 200 ml DMSO werden während 20 Std. bei 100° gerührt. Das Reaktionsgemisch wird abgekühlt, mit Toluol/verd. Salzsäure versetzt, die organische Phase abgetrennt, zweimal mit Wasser

gewaschen, mit Natriumsulfat getrocknet und eingedampft. Der Rückstand wird mit Pentan gewaschen und aus Cyclohexan umkristallisiert. Ausbeute: 22,9 g (82 %), Smp. 127-9°.

Elementaranalyse für $C_{26}H_{26}O_3$ (MG 386,49)

| | | | |
|---|---|---|---|
| Berechnet: | C 80,80 | H 6,78 | O 12,42 % |
| Gefunden: | C 80,68 | H 6,89 | O 12,57 % |

Beispiel 2: Herstellung von 2-Trifluormethyl-5,6,11,12-tetrathiotetracen

2.1. Herstellung des Endproduktes

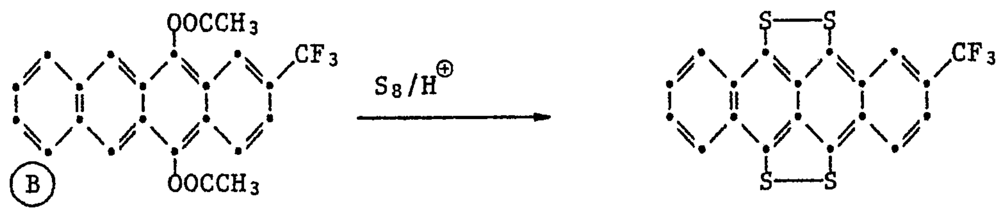


In einem 100 ml Kölbchen mit Rückflusskühler und Gaseinlassrohr werden unter leichtem Argonfluss 251 mg (0.61 mMol) Diacetat Ⓑ, 78 mg (2,43 mVal) $S_8$ und 2 mg (0,01 mMol) p-Toluol-sulfonsäure in 35 ml 1,2,4-Trichlorbenzol 20 Std. refluxiert.

Nach Abkühlen wird am Hochvakuum das Lösungsmittel abgedampft, der Rückstand mit Hexan ausgekocht, das schwarze Pulver abfiltriert und am Hochvakuum bei 60° getrocknet. Die Ausbeute beträgt 203 mg (79 %) Rohprodukt.

Dieses wird bei 190°C ($10^{-2}$ Pa) sublimiert, wodurch 67,5 mg (25.6 %) reines 2-Trifluormethyl-5,6,11,12-tetrathiotetracen erhalten werden (schwarze Nädelchen).

Massenspektrum: $M^+$ = 420; Fragmentierung steht im Einklang mit der erwarteten Struktur.

$\lambda_{max}$ (1,2,4-Trichlorbenzol): 725, 665, 484 nm.

2.2. Herstellung des Diacetats Ⓑ durch reduktive Acetylierung von 2-Trifluormethyl-tetracen-5,12-dion

Man arbeitet wie unter 1.2 beschrieben und setzt anstelle des 2-n-Octyloxitetracen-5,12-dions das 2-Trifluormethyl-tetracen-5,12-dion ein. Nach dem Aufarbeiten gemäss Beispiel 1.2 erhält man das gewünschte Produkt in einer Ausbeute von 91 % d.Th. (Schmelzpunkt: 285-8°C).

2.3. Herstellung von 2-Trifluormethyl-tetracen-5,12-dion

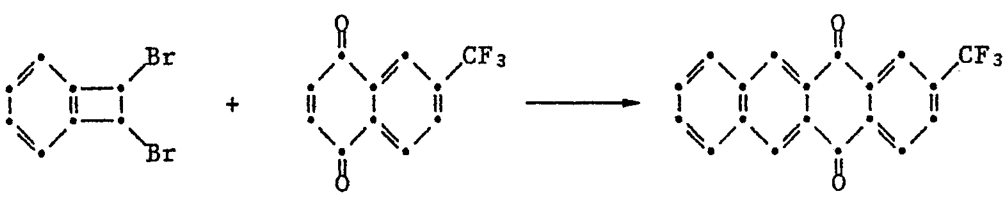

5,65 g (25 mMol) 6-(Trifluormethyl-)-1,4-naphthochinon, 9,82 g (ca. 37 mMol) 1,2-Dibrombenzocyclobuten (verunreinigt mit etwas 2-Brom-1-iodbenzocyclobuten) und 100 ml Xylol werden während 16 Std. mit Wasserabscheider am Rückfluss gehalten. Das Gemisch wird abgekühlt, der Niederschlag abfiltriert und mit Xylol gewaschen. Die Ausbeute beträgt 5,82 g (71 %); Smp. 253-54°.

Elementaranalyse für $C_{19}H_9F_3O_2$ (MG 326,27)

| | | | |
|---|---|---|---|
| Berechnet: | C 69,95 | H 2,78 | F 17,47 % |
| Gefunden: | C 69,84 | H 3,05 | F 17,38 %. |

2.4. Herstellung von 6-(Trifluormethyl)-1,4-naphthochinon

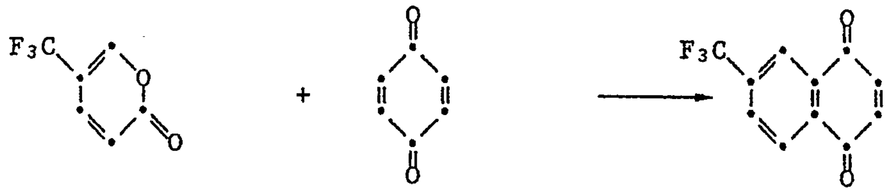

1,64 g (0.01 mol) 5-Trifluormethyl-2-oxo-2H-pyran, 5,4 g (0.05 mol) 1,4-Benzochinon in 7 ml 1,2-Dichlorbenzol werden 12 h auf 180°C erhitzt. Das Reaktionsgemisch wird dann bei 90°/20 mbar eingedampft und der Destillationsrest über 150 g Kieselgel 60 chromatographiert (Laufmittel $CH_2Cl_2$: Aceton 19:1; 0,3 bar Ueberdruck), Ausbeute 1,82 g (80,53 %); Smp. 80-85°.

Beispiel 3: Herstellung von 2-n-Octadecyloxi-5,6,11,12-tetrathiotetracen

Man arbeitet in Analogie zu Beispiel 1 und setzt 2-Fluor-tetracen-5,12-dion mit 1-Octadecanol um, überführt das erhaltene 2-n-Octadecyloxitetracen-5,12-dion durch reduktive Acetylierung in das entsprechende Diacetat und setzt dieses mit Schwefel in Gegenwart von p-Toluolsulfonsäure zum 2-n-Octadecyloxi-tetracen-5,6,11,12-tetrathiotetracen um. Die einzelnen Reaktionsprodukte besitzen folgende charakteristische Daten:

2-n-Octadecyloxi-tetracen-5,12-dion:
Massenspektrum $M^+ = 526$;
Smp. 85-90°C;
$\lambda_{max}$ (Chloroform) : 410 (sh), 390, 316 (sh), 296, 286 (sh) (nm);

Analyse:

| | | %C | %H | %O |
|---|---|---|---|---|
| Berechnet für $C_{36}H_{46}O_3$ | : | 82,09 | 8,80 | 9,11 |
| Gefunden | : | 82,26 | 8,81 | 8,97. |

2-n-Octadecyloxi-5,12-bis-(acetoxi)-tetracen:
Massenspektrum $M^+ = 612$;
Smp. 155-157°C;

Analyse:

| | | %C | %H | %O |
|---|---|---|---|---|
| Berechnet für $C_{40}H_{52}O_5$ | : | 78,39 | 8,55 | 13,05 |
| Gefunden | : | 78,30 | 8,59 | 13,01. |

2-n-Octadecyloxi-5,6,11,12-tetrathiotetracen:
Massenspektrum $M^+ = 620$; die Fragmentierung steht mit der erwarteten Struktur in Einklang;
$\lambda_{max}$ (1,2,4-Trichlorbenzol) : 699, 644, 472 (nm).

B. Anwendungsbeispiele

In den Anwendungsbeispielen werden die folgenden Substanzen verwendet:

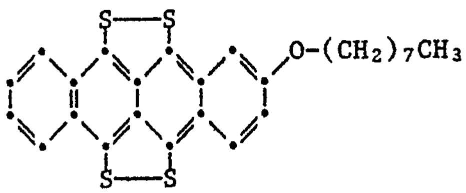

1

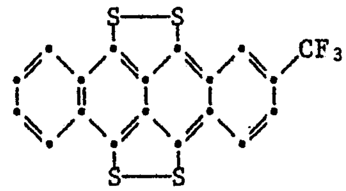

2

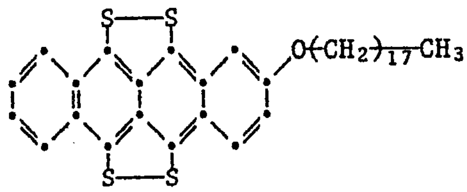

3

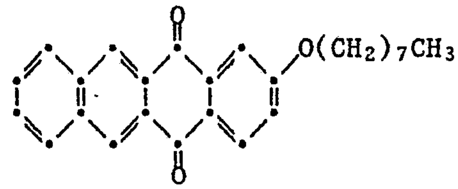

5

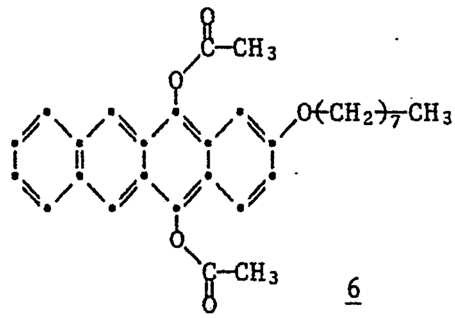

6

$CH_3-(CH_2)_{11}-C\equiv C-C\equiv C-(CH_2)_8-COOH$

8

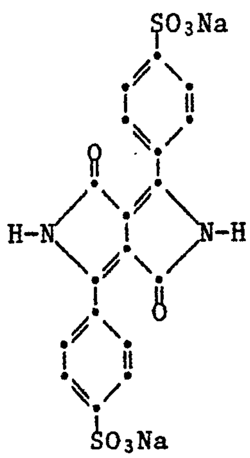

9 Die Herstellung dieser Verbindung ist in der EP-A-224,445 beschrieben.

Beispiel I

Man stellt eine Lösung von 2-n-Octyloxi-5,6,11,12-tetrathiotetracen 1 in Chloroform her (0,5 mg/ml). Diese Lösung wird bei konstanter Temperatur auf der Wasseroberfläche eines Langmuir-Troges gespreitet. Es wird ein kommerzieller Langmuir-Trog (MGW Lauda) verwendet (Grösse 70 x 15 x 0,6 cm; präparative Ausführung). Als Subphase dient i.a. entionisiertes Wasser, das mit einer Milli-Q-Anlage (Millipore Corp.) weiter gereinigt wurde (spez. Widerstand $\rho >$ 18 MΩ•cm). Bei Bedarf wird auch eine $3 \times 10^{-4}$ M $CdCl_2$-Lösung (Merck, purum) verwendet, die mit $NaHCO_3$ (Merck, p.a.) auf etwa pH 6,8 eingestellt wird. Die verwendeten Lösungsmittel sind von spektroskopischer Qualität. Nach dem Spreiten bildet sich ein monomolekularer Film, den man mit einer Geschwindigkeit von 1,25 cm/min. komprimiert, wobei der Filmdruck (Schub) $\pi$ [mN/m] in Abhängigkeit der Fläche pro Molekül A [$nm^2$/Molekül] registriert wird (Schub-Flächen-Isotherme). Es werden Monoschichten erhalten, deren Eigenschaften in Tabelle 1 aufgelistet sind.

Beispiel II:

Es wird wie in Bsp. I verfahren. Anstelle von 1 verwendet man 2-Trifluoromethyl-5,6,11,12-tetrathiotetracen 2. Die Eigenschaften der erhaltenen Monoschichten sind in Tabelle 1 aufgeführt.

Beispiel III:

Es wird wie in Bsp. I verfahren. Anstelle von 1 verwendet man 2-n-Octadecyloxi-5,6,11,12-tetrathiotetracen 3. Die Eigenschaften der erhaltenen Monoschichten sind in Tabelle 1 aufgeführt.

Tabelle 1:

| Verbindung | T [°C] | $\pi_{KOLLAPS}$ [mN/m] | $A_{KOLLAPS}$ [nm²/Molekül] |
|---|---|---|---|
| 1 | 15 | 47 | 0,32 |
| 2 | 20,7 | 44 | 0,28 |
| 3 | 15 | 50 | 0,26 |

Beispiel IV:

Eine gemäss Bsp. I hergestellte Lösung von 2-n-Octyloxi-5,6,11,12-tetrathiotetracen 1 wird mit einer Lösung von Methylarachidat 4 (Fluka, puriss.) in Chloroform (1 mg/ml) so gemischt, dass Mischlösungen unterschiedlicher Zusammensetzung entstehen (s. Tabelle 2). Diese Lösungen werden auf der Wasseroberfläche eines Langmuir-Troges (nach Bsp. I) gespreitet. Die gebildeten monomolekularen Filme werden mit einer Geschwindigkeit von 1,25 cm/min komprimiert, und analog Bsp. I werden die Schub-Flächen-Isothermen aufgenommen. Die charakteristischen Daten dieser Monoschichten sind in Tabelle 2 zusammengefasst.

Tabelle 2:

| 1 + 4 [Mol %] | T [°C] | $\pi_{KOLLAPS}$ [mN/m] | $A_{KOLLAPS}$ [nm²/Molekül] |
|---|---|---|---|
| 100 : 0 | 15,5 | 47 | 0,32 |
| 90 : 10 | " | 42 | 0,36 |
| 80 : 20 | " | 42 | 0,34 |
| 70 : 30 | " | 47 | 0,29 |
| 0 : 100 | " | 51 | 0,21 |

Beispiel V:

Es wird wie in Bsp. IV verfahren. Anstelle von Methylarachidat 4 wird 2-n-Octyloxi-tetracen-5,12-dion 5 (0,64 mg/ml Chloroform) verwendet. Die charakteristischen Daten der Monoschichten sind in Tabelle 3 aufgeführt.

Tabelle 3:

| 1 + 5 [Mol %] | T [°C] | $\pi_{KOLLAPS}$ [mN/m] | $A_{KOLLAPS}$ [nm²/Molekül] |
|---|---|---|---|
| 100 : 0 | 15 | 45 | 0,33 |
| 90 : 10 | " | 44 | 0,31 |
| 80 : 20 | " | 43 | 0,33 |
| 70 : 30 | " | 40 | 0,33 |
| 60 : 40 | " | 40 | 0,32 |
| 50 : 50 | " | 39 | 0,31 |
| 0 : 100 | " | 37 | 0,31 |

Beispiel VI:

Es wird wie in Bsp. IV verfahren. Anstelle von Methylarachidat 4 wird 5,12-Bis-acetoxi-2-octyloxi-tetracen 6

in Chloroform gelöst (ca 0,4 mg/ml) verwendet und eine Mischlösung von 1 und 6 im Verhältnis 70:30 (Mol %) hergestellt.

Der Film hat beim Kollapspunkt einen Filmdruck $\pi = 47$ mN/m und eine Fläche $A = 0{,}28$ $nm^2$/Molekül.

Beispiel VII:

Es wird, wie in Bsp. IV beschrieben, eine Mischlösung von 2-n-Octyloxi-5,6,11,12-tetrathiotetracen 1 und Methylarachidat 4 im Verhältnis 70:30 (Mol %) hergestellt und auf der Wasseroberfläche eines Langmuir-Troges (nach Bsp. I) gespreitet. Der gebildete monomolekulare Film wird mit einer Geschwindigkeit von 1,25 cm/min. komprimiert, bis ein Filmdruck von 20 mN/m erreicht ist. Bei konstantem Druck wartet man, bis keine Flächenabnahme mehr zu verzeichnen ist. Anschliessend wird der Film nach der Langmuir-Blodgett-Technik auf hydrophobisierte Quarzplättchen[1] (12 x 25 mm) übertragen. Zur Uebertragung der Monoschichten wird ein Filmlift FL-I (MGW-Lauda) verwendet.

([1] Die Quarzplättchen werden zunächst in einer heissen Lösung von $K_2S_2O_8$ (Fluka, puriss.) in $H_2SO_4$ (Merck, p.a. 95-97 %) und anschliessend in $10^{-3}$M NaOH (Merck, p.a.) gereinigt und gut mit Millipore-Wasser gespült. Dann werden sie entweder durch Silanisierung (Behandlung mit Octadecyltrichlorsilan (Merck, 98 %)) oder durch Vorbeschichten mit drei Lagen Cd-Arachidat (Fluka, puriss.) hydrophobisiert.)

Die Uebertragungsgeschwindigkeit der Monoschichten beträgt 2-3 cm/min. Die erhaltenen Multischichten besitzen Y-Orientierung und sind blau-grün gefärbt. Es werden 20-60 Schichten aufgezogen. Aus Röntgenbeugungsuntersuchungen folgt ein Doppelschichtabstand $d_{001}$ von 4,22 nm.

Beispiel VIII:

Es wird wie in Bsp. VII verfahren. Anstelle von Methylarachidat 4 wird 5,12-Bis-acetoxi-2-octyloxi-tetracen 6 (0,4 mg/ml Chloroform) verwendet. Es werden 20-60 Monoschichten aufgezogen. Die Multischicht besitzt Absorptionsmaxima bei 640, 685 und 760 nm.

Beispiel IX:

Es wird wie in Bsp. VII verfahren. Anstelle von Methylarachidat 4 wird Arachinsäure 7 (Fluka, puriss.) verwendet. Als Subphase dient eine 3 x $10^{-4}$ M $CdCl_2$-Lösung (pH 6,8). Es werden 20-60 Schichten aufgezogen. Die Multischicht besitzt Absorptionsmaxima bei 620, 670 und 750 nm.

Beispiel X:

Es wird wie in Bsp. VII verfahren. Anstelle von Methylarachidat 4 wird Pentacosa-10,12-diinsäure 8 verwendet. Als Subphase dient eine 3 x $10^{-4}$ M $CdCl_2$-Lösung (pH 6,8). Es werden 20-60 Monoschichten übertragen. Die Multischicht besitzt Absorptionsmaxima bei 570, 624, 676 und 750 nm. Bei Bestrahlung mit UV-Licht ($\lambda = 254$ nm) treten zusätzlich Banden zwischen 500 und 700 nm auf.

Beispiel XI:

Es wird wie in Bsp. VII verfahren. Anstelle von 1 wird 2-Trifluoromethyl-5,6,11,12-tetrathiotetracen 2 verwendet. Es werden 20-60 Monoschichten aufgezogen. Die Multischicht besitzt Absorptionsmaxima bei 714 und 770 nm.

Beispiel XII:

Für Leitfähigkeitsmessungen in der Schichtebene werden Multischichten nach Bsp. VII hergestellt (30 Schichten). Auf die oberste Schicht werden im Vakuum ($10^{-1}$ - $10^{-3}$ Pa) mittels einer Maske Goldelektroden aufgedampft. Diese werden mit Golddraht und Pt-Paste kontaktiert. Zur Dotierung werden die Proben einer Iodgesättigten Argonatmosphäre ausgesetzt. Bei der Iodbehandlung ändert sich die Farbe der Multischichten von blau-grün nach braun-violett (in Reflexion metallisch glänzend). Die elektrische Leitfähigkeit $\sigma$ wird vor und nach dem Dotieren mit einem Elektrometer (Keithley) bestimmt. Charakteristische Daten vor und nach dem Dotieren sind in Tabelle 4 zusammengefasst.

Beispiel XIII:

Es werden Multischichten nach Bsp. VIII hergestellt (30 Schichten). Die Proben werden, wie in Bsp. XII beschrieben, kontaktiert und anschliessend mit Iod dotiert, wobei die Aenderung der Leitfähigkeit bestimmt wird. Bei der Iodbehandlung ändert sich die Farbe der Multischicht von blau-grün nach braun-violett (in Reflexion metallisch glänzend). Die charakteristischen Daten vor bzw. nach der Dotierung sind in Tabelle 4 aufgeführt.

Beispiel XIV:

Es werden Multischichten nach Bsp. VII hergestellt (30 Schichten). Sie werden, wie in Bsp. XII beschrieben, kontaktiert. Anschliessend werden die Proben zur Dotierung einem Argonstrom, der 0,1 % V/V Chlor enthält, ausgesetzt, wobei gleichzeitig die Leitfähigkeit bestimmt wird. Bei der Chlorbehandlung ändert sich die Farbe der Multischichten von blau-grün nach blau-violett und schliesslich rot-orange. Charakteristische Daten der Multischichten vor und nach dem Dotieren sind in Tabelle 4 aufgeführt.

Beispiel XV:

Es werden Multischichten nach Bsp. XI hergestellt (30 Schichten). Sie werden, wie in Bsp XII beschrieben, kontaktiert und mit Iod dotiert, wobei die Aenderung der Leitfähigkeit bestimmt wird. Bei der Iodbehandlung ändern die Multischichten ihre Farbe von blau-grün nach braun-violett (in Reflexion metallisch glänzend). Die charakteristischen Daten vor bzw. nach dem Dotieren sind in Tabelle 4 zusammengefasst.

Tabelle 4:

| Beispiel | Proben (Mol %) Dotierung | Leitfähigkeit σ [$Scm^{-1}$] | | $\lambda_{max}$ [nm] | |
|---|---|---|---|---|---|
| | | undotiert | dotiert | undotiert | dotiert |
| XII | 1 : 4 (70 : 30) Iod-dotiert | $1{,}98 \cdot 10^{-8}$ | $1{,}23 \cdot 10^{-3}$* | 640, 685 760 | 440, 550 |
| XIII | 1 : 6 (70 : 30) Iod-dotiert | $6{,}0 \cdot 10^{-6}$ | $4{,}2 \cdot 10^{-4}$* | 640, 683 760 | 402, 550 |
| XIV | 1 : 4 (70 : 30) Chlor-dotiert | $1{,}39 \cdot 10^{-7}$ | $1{,}51 \cdot 10^{-4}$* | 640, 685 760 | 530 |
| XV | 2 : 4 (70 : 30) Iod-dotiert | $7{,}7 \cdot 10^{-7}$ | $1{,}24 \cdot 10^{-4}$* | 714, 770 | 438 |

* Maximalwerte; an Luft oder bei sehr langer Halogenbehandlung nimmt σ wieder ab.

Beispiel XVI:

Es werden gemischte Multischichten von 1 gemäss Bsp. VII hergestellt. Als Subphase verwendet man Lösungen von $KI_3$ (ICN Biomedicals Inc.) in Wasser mit unterschiedlichen Konzentrationen (vergl. Tab 5). Es werden 10-60 Monoschichten übertragen. Die Multischichten sind violett gefärbt (wenn die $KI_3$ Konzentration grösser als $2{,}5 \cdot 10^{-4}$ M ist) und haben in Reflexion einen metallischen Glanz. Die spektroskopischen Daten dieser Multischichten sind in Tabelle 5 aufgelistet.

Tabelle 5:

| [$KI_3$] in mol/l | $\lambda_{max}$ [nm] | | ε[$cm^{-1}$] |
|---|---|---|---|
| $4{,}55 \cdot 10^{-3}$ | 224 (sh), | 304 (sh), | 556 (103'690) |
| $2{,}28 \cdot 10^{-3}$ | 224 (sh), | 305 (sh), | 560 (82'060) |
| $1{,}14 \cdot 10^{-3}$ | 226 (sh), | 306 (sh), | 560 (73'460) |
| $5{,}70 \cdot 10^{-4}$ | 232 (sh), | 308 (sh), | 563 (73'460) |
| $2{,}85 \cdot 10^{-4}$ | 230 (sh), | 306 (sh), | 570 (41'770) |
| $1{,}43 \cdot 10^{-4}$ | 230 (sh), | 308 (sh), | 576 (26'780) |

Beispiel XVII:

Es werden gemischte Multischichten von 1 gemäss Bsp. VII hergestellt. Als Subphase dient eine $10^{-3}$ M $KI_3$-Lösung. Es werden 30 Schichten aufgezogen. Die Multischicht ist violett gefärbt. Sie wird, wie in Bsp. XII beschrieben, mit Goldelektroden kontaktiert, und anschliessend wird die Leitfähigkeit gemessen. Danach wird die Probe einer gesättigten Iod/Argon-Atmosphäre ausgesetzt, wobei die Farbe der Multischicht von violett nach braun umschlägt und die Leitfähigkeit zunimmt. Die Leitfähigkeitsdaten und die spektroskopischen Daten dieser Multischichten findet man in Tabelle 6.

Tabelle 6:

| Dotierung | σ [S $cm^{-1}$] | $\lambda_{max}$ [nm] |
|---|---|---|
| $KI_3$-Subphase | $2,7 \cdot 10^{-4}$<br>$4,45 \cdot 10^{-5}$ *) | 554 |
| Zusätzlich mit $I_2$/Ar behandelt | $1,0 \cdot 10^{-2}$<br>$3,75 \cdot 10^{-4}$ *) | 423, 550 |

*) Nach 82 Tagen Lagerung an Luft bei +5°C.

Beispiel XVIII:

Man stellt Multischichten nach Bsp. VII her, wobei 30 Monoschichten aufgezogen werden. Anschliessend taucht man die Proben während 15 Stunden in eine $5,3 \cdot 10^{-4}$ M wässrige $KI_3$-Lösung ein, wobei sich die Farbe der Multischichten von blau-grün nach orange-braun (UV/VIS-Absorptionen bei 402, 480, 560 nm) ändert. Die Multischichten werden, wie in Bsp. XII beschrieben, mit Goldelektroden kontaktiert, dann wird die elektrische Leitfähigkeit σ in der Schichtebene mit einem Elektrometer (Keithley) gemessen. Anschliessend setzt man die Proben einer iodgesättigten Argonatmosphäre aus und bestimmt die Leitfähigkeit nochmals.

| | | |
|---|---|---|
| σ ($KI_3$): | $1,52 \cdot 10^{-4}$ | S $cm^{-1}$. |
| σ ($KI_3 + I_2$): | $4,79 \cdot 10^{-3}$ | S $cm^{-1}$. |

Beispiel XIX: Herstellung einer gemischten LB-Multischicht aus 2-n-Octyloxi-5,6,11,12-tetrathiotetracen 1 und Methylarachidat 4

Man stellt eine Lösung von 1 in Chloroform her (ca. 0,5 mg/ml) und mischt sie mit einer Lösung von Methylarachidat 4 in Chloroform (ca. 1 mg/ml), so dass eine Mischlösung 1: 4 von 70:30 (Mol %) entsteht. Diese Lösung wird auf der Wasseroberfläche eines Langmuir-Troges analog Beispiel I bei konstanter Temperatur (T=15°C) gespreitet. Nach dem Spreiten bildet sich ein monomolekularer Film, den man mit einer Geschwindigkeit von ca. 1,25 cm/Min. komprimiert, bis ein Filmdruck von $\pi$=20 mN/m erreicht ist. Bei konstantem Druck wartet man, bis keine Flächenabnahme mehr zu verzeichnen ist. Anschliessend wird der Film nach der Langmuir-Blodgett Technik auf ITO-Glasplättchen[2] übertragen. Zur Uebertragung der Monoschicht wird ein Filmlift FL-1 (MGW-Lauda) benutzt, die Tauchgeschwindigkeit beträgt 2-3 cm/min. Die aufgezogene Multischicht mit einer Dicke von 15 Schichten besitzt Y-Orientierung und ist blaugrün gefärbt. Charakteristische Daten sind in tab. 7 aufgelistet.

([2]Glasplättchen, die auf einer Seite mit Indium-Zinn-Oxid (ITO) beschichtet sind; Hersteller: Fa. Balzers, Liechtenstein; zur Reinigung werden die ITO-Glasplättchen (11x18x1 cm) in Chlorofrom mit Ultraschall behandelt. Dabei darf sich das Lösungsmittel nicht wesentlich erwärmen, da sonst die ITO-Schicht zerstört wird.)

Beispiel XX: Elektrochemische Oxidation und Reduktion der LB-Multischicht aus 1 und Methylarachidat 4 unter Verwendung von $LiClO_4$ als Leitsalz

Eine nach Beispiel XIX hergestellte Multischicht wird in eine $10^{-3}$ molare Lösung von $LiClO_4$ (Fluka purum) in "Millipore-Wasser" getaucht und einer Elektrolyse unterworfen. Die Multischicht wird als Anode geschaltet und als Gegenelektrode dient ein ebenfalls in die Lösung tauchender Golddraht. Der Abstand zwischen Golddraht und Multischicht beträgt ca. 2 cm. Als Gleichstromquelle dient ein Netzgerät der Fa. Kikusui (Modell PAB 18-1A). Bei Anlegen einer Spannung (0,1 bis 2,0 V) fliesst ein Strom und die Donormoleküle 1 in der Multischicht werden oxidiert. Die Oxidation lässt sich spektrometrisch verfolgen (Tab. 7)[3]. Bei niedriger Spannung (0,1 bis 0,4 V) bildet sich das violett gefärbte Radikalkation ($\lambda_{max}$=576 nm) und bei höherer Spannung (>0,4 V) das Dikation mit Absorptionsmaxima bei 425 nm. Polt man nach erfolgter Oxidation um, erhält man das UV/VIS-Spektrum der neutralen TTT-Moleküle zurück.

([3] Die Multischicht wird vor der spektroskopischen Messung auf der nichtleitenden Rückseite des Substrates entfernt.)

Beispiel XXI: Elektrochemische Oxidation und Reduktion der LB-Multischicht aus 1 und Methylarachidat 4 unter Verwendung von Natriumdodecylsulfat als Leitsalz

Eine nach Beispiel XIX hergestellte Multischicht wird wie in Beispiel XX beschrieben elektrochemisch oxidiert. In Abänderung wird statt der $LiClO_4$-Lösung eine $10^{-3}$-molare Lösung von Natriumdodecylsulfat (Merck, "für biochemische Zwecke und Tensiduntersuchungen") in "Millipore-Wasser" verwendet (pH=5,95). Die UV/VIS-spektroskopischen Daten der elektrochemisch behandelten Multischichten sind in Tab. 7

aufgelistet. Die Multischicht auf der nichtleitenden Rückseite wurde vor der spektroskopischen Messung entfernt. Die spektroskopischen Daten zeigen, dass 1 elektrochemisch oxidiert bzw. reduziert wird.

Beispiel XXII: Elektrochemische Oxidation der LB-Multischicht aus 1 und Methylarachidat 4 unter Verwendung von Dinatriumdiketopyrrolopyrroldisulfonat (DPP-Disulfonat) 9 als Leitsalz

Eine nach Beispiel XIX hergestellte Multischicht wird wie in Beispiel XX beschrieben elektrochemisch oxidiert. In Abänderung wird statt der $LiClO_4$-Lösung eine $10^{-4}$-molare Lösung von DPP-Disulfonat 9 in "Millipore-Wasser" (pH=5,85) verwendet. Die UV/VIS-spektroskopischen Daten der elektrochemisch behandelten Multischichten sind in Tabelle 7 aufgelistet. Die Multischicht auf der nichtleitenden Rückseite des Substrats wurde vor der spektroskopischen Messung entfernt. Die spektroskopischen Daten zeigen, dass 1 elektrochemisch oxidiert wird.

Beispiel XXIII: Cyclische Voltammetrie an LB-Multischichten aus 1 und Methylarachidat 4

Ein nach Beispiel XIX hergestellter LB-Film wird in eine 0,1 molare Natriumdodecylsulfatlösung getaucht und einer cyclischen Voltammetrie unterworfen. Die Natriumdodecylsulfat (SDS) Lösung wird durch Lösung von in 95%igem Ethanol umkristallisiertem SDS in tridestilliertem, mit Stickstoff gesättigtem Wasser hergestellt. Die cyclische Voltammetrie wird mit einem Gerät der Fa. PAR (Modell 273) durchgeführt. Als Referenzelektrode dient eine $Ag/Ag^+$-Elektrode, die in die SDS-Lösung eintaucht. Die Oxidation der Multischicht zur Radikalkationenstufe von 1 erfolgt bei einem Potential von -238 mV und zur Dikationenstufe bei +173 mV. Oxidation und Reduktion sind viele Male reversibel. Nach 120 Cyclen kann noch 1/3 des ursprünglichen Spitzenstroms für die Oxidation zum Radikalkation gemessen werden. Der maximale Spitzenstrom wird nach einer Konditinierungsphase von 10 Cyclen erreicht.

Beispiel XXIV: Elektrochemische Reduktion und Oxidation einer ioddotierten Multischicht aus 1 und Methylarachidat 4

Es wird eine LB-Multischicht gemäss Beispiel XIX hergestellt, deren Schichtdicke 33 Monoschichten beträgt. Die LB-Multischicht wird für die Dauer von 2 Stunden einer iodgesättigten Argonatmosphäre ausgesetzt, wobei Oxidation von 1 zur Dikationenstufe erfolgt. Anschliessend wird die Multischicht, wie in Beispiel XX beschrieben, elektrochemisch reduziert, wieder oxidiert und reduziert. Dies wird durch jeweiliges Schalten des ITO-beschichteten Glasplättchens als Kathode, Anode und wieder Kathode erreicht. Die Spannung beträgt jeweils 2 V. Zum Nachweis der eingetretenen Oxidation bzw. Reduktion wird die Multischicht auf der nichtleitenden Rückseite des Substrats abgewischt und die Multischicht auf der ITO-Seite UV/VIS-spektroskopisch vermessen. Die Daten sind in Tab. 8 aufgelistet. Sie zeigen, dass die chemisch mit Iod dotierte Probe elektrochemisch reduziert, wieder oxidiert und reduziert werden kann.

Tabelle 7

Charakteristische Daten von Multischichten aus 1 und Methylarachidat 4 in neutraler und elektrochemisch oxidierter Form, hergestellt nach Beispielen XIX bis XXII

| Multischicht aus Beispiel | Spannung [V] | Zahl der übertragenen Schichten | $d_{001}$-Wert* [nm] | $\lambda_{max}$** [nm] | ε*** [$cm^{-1}$] |
|---|---|---|---|---|---|
| XIX | - | 15 | | 750sh<br>670 | <br>(9'300) |
| XX | 0,2 | 15 | | 570 | (10'600) |
| XX | 0,5 | 51 | 4,17 | 570 | (9'300) |
| XX | 0,8 | 15 | | ~560<br>420 | (6'100)<br>(10'900) |
| XX | 1,0 | 15 | | ~560<br>420 | (6'400)<br>(15'100) |
| XX | 1,5 | 51 | 4,16 | ~560<br>420 | (5'800)<br>(14'700) |
| XX | 2,0 | 15 | | ~560<br>420 | (5'400)<br>(14'100) |
| XXI | 1,5 | 31 | | 470 | (30'100) |
| XXI | -1,5 | 31 | | 560 | (10'100) |
| XXII | 1,5 | 31 | | 570 | (9'000) |

* Röntgenographisch mittels Philips-Pulverdiffraktometer ermittelter Doppelschichtabstand. Es wurden in der Regel 3 Ordnungen von Reflexen beobachtet.

** Die Absorptionsbanden sind oft sehr breit, so dass eine exakte Zuordnung der Maxima zu Wellenlängen schwierig ist.

*** Die ε-Werte wurden auf Basis eines angenommenen $d_{001}$-Wertes von 4,16 nm bei allen Proben berechnet.

Tabelle 8:

UV/VIS-spektroskopische Daten der Multischichten aus Beispiel XXIV

| Probenbehandlung | $\lambda_{max}$ [nm] | ε [$cm^{-1}$] |
|---|---|---|
| undotiert | 750sh | |
| | 660 | (12'200) |
| iod-dotiert | 550 | (47'400) |
| | 460sh | |
| elektrochemisch | 750sh | |
| reduziert | 660 | (9'500) |
| elektrochemisch | 550 | (16'000) |
| oxidiert | 460 | (19'200) |

**Patentansprüche**

1. Mono- oder Multischichtsysteme enthaltend Verbindungen der Formel I

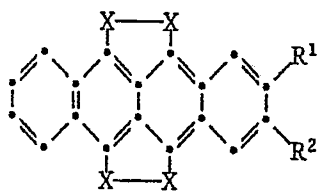

(I),

worin X S oder Se ist, $R^1$ $C_1$-$C_{30}$Alkyl, -$CF_3$, -O-$R^3$, -S-$R^3$ oder -CO-O-$R^3$ bedeutet, $R^2$ Wasserstoff, $C_1$-$C_{30}$Alkyl, -$CF_3$, -O-$R^3$, -S-$R^3$ oder -CO-O-$R^3$ ist, und $R^3$ $C_1$-$C_{30}$Alkyl oder $C_1$-$C_{30}$Teilfluor-oder Perfluoralkyl ist.

2. Systeme gemäss Anspruch 1, dadurch gekennzeichnet, dass es sich um eine monomolekulare Schicht oder um Folgen von monomolekularen Schichten enthaltend Verbindungen der Formel I handelt, die durch Uebertragung auf feste Träger nach dem Langmuir-Blodgett Verfahren (LB-Verfahren) erhältlich sind.

3. Systeme gemäss Anspruch 1, worin X S ist.

4. Systeme gemäss Anspruch 3, worin $R^1$ -O-$R^3$ ist und $R^2$ Wasserstoff bedeutet.

5. Systeme gemäss Anspruch 3, worin $R^1$ -$CF_3$ bedeutet und $R^2$ Wasserstoff ist.

6. Systeme gemäss Anspruch 1, worin $R^3$ $C_3$-$C_{18}$Alkyl ist.

7. Systeme gemäss Anspruch 2 aus Mischfilmen enthaltend 1-95 Mol% an Verbindungen der Formel I in Kombination mit weiteren, zur Stabilisierung von monomolekularen Filmen befähigten, amphiphilen Verbindungen.

8. Systeme gemäss Anspruch 2 aus Mischschichten aus Verbindungen der Formel I und Salzen langkettiger gesättigter Carbonsäuren, Salzen langkettiger ungesättigter Säuren, Methylestern dieser Säuren oder Verbindungen der Formeln XIII oder XIV

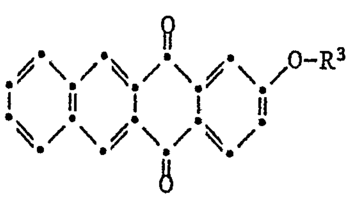

(XIII),

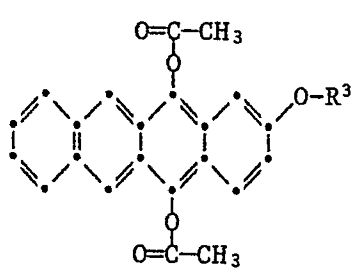

(XIV),

worin $R^3$ die in Anspruch 1 definierte Bedeutung besitzt.

9. Verfahren zur Herstellung von elektrisch leitfähigen Mono- oder Multischichtsystemen umfassend

die Schritte

i) Herstellung einer monomolekularen Schicht aus einer Verbindung der Formel I gemäss Anspruch 1 oder aus einem Gemisch einer Verbindung der Formel I in Kombination mit weiteren zur Stabilisierung solcher Schichten befähigten amphiphilen Verbindungen,

ii) Uebertragung dieser Schicht auf einen festen Träger gemäss dem Langmuir-Blodgett Verfahren durch ein-oder mehrfaches Ein- und/oder Austauchen besagten Trägers durch die Schicht, sowie

iii) Kontaktieren des gebildeten Mono- oder Multischichtsystems mit einer wässrigen Lösung enthaltend einen Elektronenakzeptor für die Verbindung der Formel I, welcher eine Oxidation besagter Verbindung bewirkt.

10. Verfahren zur Herstellung von elektrisch leitfähigen Mono- oder Multischichtsystemen umfassend die Schritte i) und ii) gemäss Anspruch 9, wobei die Subphase zur Herstellung besagter monomolekularer Schicht einen Elektronenakzeptor enthält, welcher an der Wasser/Luft Grenzfläche mit der Verbindung der Formel I einen Donor-Akzeptor Komplex ausbildet.

11. Verfahren zur Herstellung von elektrisch leitfähigen mono- oder Multischichtsystemen umfassend Schritt i) gemäss Anspruch 9, und ii) Uebertragung dieser Schicht auf einen festen Träger mit einer elektrisch leitfähigen Oberfläche durch ein- oder mehrmaliges Tauchen besagten Trägers durch die Schicht, und iii) elektrochemische Oxidation besagten Schichtsystems durch Eintauchen besagten beschichteten Trägers in eine Elektrolytlösung, in die auch eine Gegenelektrode eintaucht, und Schalten besagten Trägers als Anode unter Anlegen eines Potentials, so dass die Verbindung der Formel I in besagtem Schichtsystem unter Einbau von Gegenionen aus dem Elektrolyten oxidiert wird.

12. Verfahren zur reversiblen elektrochemischen Oxidation oder Reduktion von LB-Schichtsystemen enthaltend ein Verbindung der Formel I gemäss Anspruch 1 oder eine oxidierte Form dieser Verbindung umfassend das Eintauchen eines mit LB-Schichten enthaltend besagte Verbindung der Formel I beschichteten Trägers mit elektrisch leitfähiger Oberfläche in eine Elektrolytlösung, in die auch eine Gegenelektrode eintaucht, und Schalten besagten Trägers als Anode oder Kathode unter Anlegen eines Potentials, so dass die Verbindung der Formel I oxidiert oder die oxidierte Form der Verbindung der Formel I reduziert wird.

13. Elektrisch leitfähige Mono- oder Multischichtsysteme enthaltend Donor-Akzeptor Komplexe aus Verbindungen der Formel I gemäss Anspruch 1 und einem Elektronenakzeptor.

14. Verwendung der Mono- oder Multischichtsysteme gemäss Anspruch 1 zur Herstellung von elektrisch leitfähigen Ueberzügen, elektrochromen Anzeigen, Elektroden und Sensoren.